# EUROPEAN PATENT APPLICATION

(11) **EP 3 505 841 A1**
(43) Date of publication of application: **03.07.2019**
(21) Application number: 17843118.5
(22) Date of filing: 01.05.2017
(51) Int. Cl.: F24F 11/30

(54) **AIR CONDITIONING DEVICE**

(30) Priority: 26.08.2016 JP 2016165761
(71) Applicant: Mitsubishi Electric Corporation, Chiyoda-ku Tokyo 100-8310 (JP)
(72) Inventor: KOBAYASHI, Ryosuke, Tokyo 100-8310 (JP); MORIYAMA, Takashi, Tokyo 100-8310 (JP); IWABUKI, Hiroyasu, Tokyo 100-8310 (JP); MURAKAMI, Hiroki, Tokyo 100-8310 (JP); YAMASAKI, Hisanori, Tokyo 100-8310 (JP)
(74) Representative: Trinks, Ole
(86) International application number: PCT/JP2017/017129
(87) International publication number: WO 2018/037629

(57) **Abstract**

An air-conditioning apparatus according to the present invention includes: a plurality of compressors included in one or more refrigerant circuits which air-condition a target space to be air-conditioned; a power converter which converts electric power supplied from a power source unit and supply the compressors with electric power for driving the compressors at an arbitrary drive rotation speed; a switching device which perform switching between a power supplying operation to cause each of the compressors to be supplied with electric power from the power converter and a power supplying operation to cause each of the compressors to be supplied with electric power directly from the power source unit; and a controller which controls the power converter and the switching device.

## Description

### TECHNICAL FIELD

The present invention relates to an air-conditioning apparatus provided with a plurality of compressors which are operated by electric power supplied from a power supply unit. For example, the present invention relates to a railroad-vehicle air-conditioning apparatus.

### BACKGROUND ART

In air-conditioning apparatuses, a compressor, a condenser, a decompressor and an evaporator are connected by pipes, whereby a refrigerant circuit is formed, and refrigerant is circulated to air-condition a target space to be air-conditioned. The air-conditioning apparatuses are used in various locations such as houses, buildings, railroad vehicles and automobiles.

For example, railroad-vehicle air-conditioning apparatuses are operated by electric power from a railroad-vehicle auxiliary power supply unit, and air-condition the interiors of railroad vechiles. Such a railroad-vehicle air-conditioning apparatus is installed, for example, on the roof of the railroad or under the floor thereof. Therefore, the railroad-vehicle air-conditioning apparatuses are required to be small and lightweight. Also, they are required to have redundancy, since they cannot be repaired immediately when they get out of order.

In order to achieve a redundant operation of a railroad-vehicle air-conditioning apparatus, for example, it is proposed to provide an inverter device serving as a power converter for a compressor and an inverter device for a fan, and connect three-phase AC cables of load sides of these inverter devices to each other using contactors (see, for example, Patent Literature 1). Thereby, even if one of the inverter devices gets out of order, the other can perform a redundant operation for driving both the compressor and the fan. It is therefore possible to maintain the service for passengers.

### CITATION LIST

### PATENT LITERATURE

Patent Literature 1: Japanese Unexamined Patent Application Publication JP 07-194187

### SUMMARY OF INVENTION

### TECHNICAL PROBLEM

However, a compressor requires more electric power than a fan. Therefore, in the case where an inverter device for the fan is made equal in power capacity to an inverter device for the compressor, or inverter devices suitable for the fan and the compressor in terms of required power are applied, the following problems arise.

For example, in the case where the inverter device for the fan is made equal in power capacity to the inverter device for the compressor, as the inverter device for the fan, it is necessary to apply an inverter device designed for more electric power than that required by the fan. Therefore, the inverter device is made larger. Furthermore, in the case where inverter devices suitable for electric powers required by the fan and the compressor are applied, electric power which can be supplied to the compressor with the power capacity of the inverter device for the fan, only small power can be supplied to the compressor is less than the electric power required by the compressor. Therefore, in the case where the compressor is driven by the inverter device for the fan, the air-conditioning capacity is reduced. In addition, if failures occurs in both the inverter devices, the air-conditioning apparatus becomes unable to operate.

An object of the present invention is to provide an air-conditioning apparatus in which a power converter can be made smaller, and its operation can be continued even if a failure occurs in the power converter or the like.

### SOLUTION TO PROBLEM

An air-conditioning apparatus according to an embodiment of the present invention comprises: a plurality of compressors included in one or more refrigerant circuits which air-condition a target space to be air-conditioned; a power converter which converts electric power supplied from a power supply unit and supply the compressors with electric power for driving the compressors at an arbitrary drive rotation speed; a switching device which performs switching between a power supplying operation to cause each of the compressors to be supplied with electric power from the power converter and a power supplying operation to cause each of the compressors to be supplied with electric power directly from the power supply unit; and a controller which controls the power converter and the switching device.

### ADVANTAGEOUS EFFECTS OF INVENTION

In an air-conditioning apparatus according to an embodiment of the present invention, a power capacity of a power converter can be reduced to fall below rated power. Thus, the power converter can be made smaller, and the air-conditioning apparatus can also be made smaller. Furthermore, by controlling switching of the switching device, it is possible to block up a passage to a failed device, and switch a passage to be applied, to a passage which allows electric power to be supplied directly from the power supply unit. Thus, the operation can be continued, and an air-conditioning apparatus having more redundancy can be provided.

### BRIEF DESCRIPTION OF DRAWINGS

- FIG. 1: is a diagram illustrating an example of a system in which an air-conditioning apparatus according to embodiment 1 of the present invention is provided as a main element.
- FIG. 2: is a diagram illustrating another example of a configuration of a power supply unit in the system in which the air-conditioning apparatus according to embodiment 1 of the present invention is provided as the main element.
- FIG. 3: is a diagram illustrating an example of a circuit configuration of a power converter 3 according to embodiment 1 of the present invention.
- FIG. 4: is a diagram explaining distribution of electric power to be supplied to a compressor 2 in relation to an air-conditioning capacity of the air-conditioning apparatus according to embodiment 1 of the present invention.
- FIG. 5: is a timing chart of operations from an operation to make the determination that a failure occurs in a power converter 3 according to embodiment 1 of the present invention to an operation to start a redundant operation.
- FIG. 6: is a timing chart of operations from an operation to make the determination that a failure occurs in a compressor 2A according to embodiment 1 of the present invention to an operation to start the redundant operation.
- FIG. 7: is a timing chart of operations from an operation to make the determination that a failure occurs in the power converter 3 and the compressor 2A according to embodiment 1 of the present invention to an operation to start the redundant operation.

An air-conditioning apparatus according to an embodiment of the present invention will be described below with reference to the drawings and the like. In the following drawings, the same components or equivalent components are denoted by the same reference numerals and are common throughout the entire text of the embodiments described below. The forms of the components described throughout the entire text of the specification are strictly exemplary, and the components are not limited to the forms described herein. In particular, combinations of components are not limited to those described in any of the embodiments, and components described in one embodiment may be applied to another embodiment. Also, magnitudes of pressures and temperature are not determined in relation to absolute values, in particular, but are determined on a relative basis depending on conditions, operations, and the like of apparatuses and the like. Besides, in the drawings, components may not be illustrated in their true size relations.

### Embodiment 1

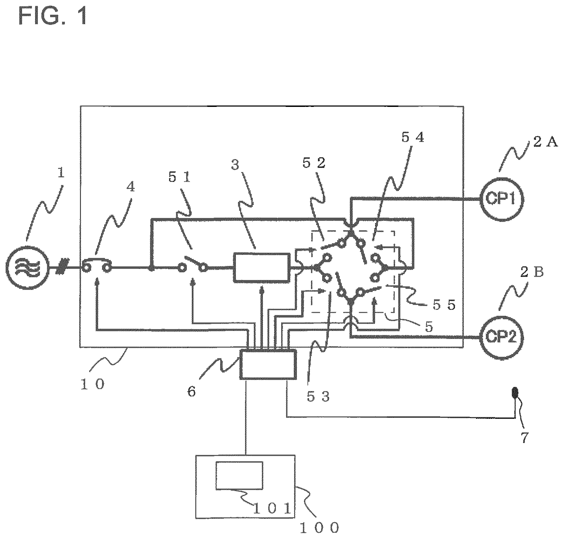

FIG. 1 is a diagram illustrating an example of a system in which an air-conditioning apparatus according to embodiment 1 of the present invention is provided as a main element. An air-conditioning apparatus according to embodiment 1 will be described by referring to by way of example the case where the air-conditioning apparatus is, for example, a railroad-vehicle air-conditioning apparatus which air-conditions the interior of a railroad vehicle as target space to be air-conditioned. In embodiment 1, a power supply unit 10 is installed to cause electric power from a railroad-vehicle auxiliary power supply unit 1 to be supplied to two compressors 2A and 2B included in a railroad-vehicle air-conditioning apparatus. It should be noted that the compressors 2A and 2B, a condenser, a decompressor and an evaporator form a refrigerant circuit of the air-conditioning apparatus. The air-conditioning apparatus may have a single refrigerant circuit or refrigerant circuits. To be more specific, in a single refrigerant circuit, the compressors 2A and 2B may be connected parallel to each other; or the compressors 2A and 2B may be provided in respective two independent refrigerant circuits. Also, in embodiment 1, the two compressors 2A and 2B are provided to increase the redundancy of the air-conditioning apparatus. However, the number of compressor is not limited, and three or more compressors may be provided.

The railroad-vehicle auxiliary power supply unit 1 is a power supply unit which outputs, for example, a three-phase AC voltage, and supplies electric power to the railroad-vehicle air-conditioning apparatus. The compressors 2A and 2B are devices included in a refrigerant circuit as described above. In the refrigerant circuit, the compressors 2A and 2B suck, compress and discharge refrigerant, and thereby circulate the refrigerant in the refrigerant circuit. The compressors 2A and 2B according to embodiment 1 are designed, for example, to obtain a maximum load output with a power-supply frequency of the railroad-vehicle auxiliary power supply unit 1. In the following description, in the case where the compressors 2A and 2B do not need to be distinguished from each other, each or both of them will be referred to as the compressor 2 or the compressors 2.

The power supply unit 10 according to embodiment 1 includes a molded case circuit breaker 4, a power converter 3, a switching device 5 and a controller 6. The molded case circuit breaker 4 is connected to the railroad-vehicle auxiliary power supply unit 1. The molded case circuit breaker 4 is opened when any of devices in subsequent stages, such as the compressor 2A, compressor 2B or the power supply unit 10, is short-circuited, and thereby protects the railroad-vehicle auxiliary power supply unit 1. Also, the molded case circuit breaker 4 is opened for maintenance of the air-conditioning apparatus, and causes no voltage to be applied to the power supply unit 10.

The switching device 5 includes a power supply contactor 51, a first contactor 52, a second contactor 53, a third contactor 54, and a fourth contactor 55. The power supply contactor 51 is connected to the molded case circuit breaker 4. The power supply contactor 51 is a contactor the state of which is switched between a closed state and an opened state to perform switching between supplying of electric power from the railroad-vehicle auxiliary power supply unit 1 toward the power converter 3 and inhibiting electric power from the railroad-vehicle auxiliary power supply unit 1 toward the power converter 3. It should be noted that in the switching device 5, components for effecting switching are not limited to the contactors. For example, devices including semiconductor switching elements can be used as the switches components.

Also, each of the first contactor 52, the second contactor 53, the third contactor 54 and the fourth contactor 55 is opened/closed to switch a current path to switch a power supply source for each of the compressor 2A and compressor 2B. Specifically, regarding electric power supplied from the railroad-vehicle auxiliary power supply unit 1, switching between reception of the electric power after it is converted by the power converter 3 and reception of the electric power directly from the railroad-vehicle auxiliary power supply unit 1 is performed, and a drive rotation speed to be applied to driving of the compressor 2 is selected. When the power supply source to be applied is switched between the above two power supply sources, and the compressor 2 receives the electric power supplied via the power converter 3, the compressor 2 is driven at a drive rotation speed based on a frequency obtained by conversion by the power converter 3. Also, when the power supply source to be applied is switched, and the compressor 2 directly receives the electric power from the railroad-vehicle auxiliary power supply unit, the compressor 2 is driven at a constant drive rotation speed with the power-supply frequency.

The first to fourth contactors 52 to 55 of embodiment 1 are connected. One end of the first contactor 52 is connected to one end of the second contactor 53, and the other end of the first contactor 52 is connected to one end of the third contactor 54. Also, one end of the fourth contactor 55 is connected to the other end of the second contactor 53, and the other end of the fourth contactor 55 is connected to the other end of the third contactor 54. A connection point between the first contactor 52 and the second contactor 53 is connected to the power converter 3. Furthermore, a connection point between the first contactor 52 and third contactor 54 is connected to the compressor 2A, and a connection point between the second contactor 53 and the fourth contactor 55 is connected to the compressor 2B. Besides, a connection point between the third contactor 54 and fourth contactor 55 is connected to a signal line between the molded case circuit breaker 4 and the power supply contactor 51.

In embodiment 1, since the number of compressors 2 is two, the switching device 5 includes the power supply contactor 51, the first contactor 52, the second contactor 53, the third contactor 54 and the fourth contactor 55. For example, in the case where three or more compressors 2 are provided, contactors are further added in accordance with the number of compressors 2.

The controller 6 of embodiment 1 controls the entire air-conditioning apparatus, which includes component devices included in the power supply unit 10 and component devices included in the refrigerant circuit. In this case, especially, by sending a control signal to the power supply unit 10, the controller 6 performs an output control over the power converter 3, an opening and closing control over the contactors of the switching device 5, and another control. Also, the controller 6 is connected to, for example, a management control device 101 of a train control and management system (TCMS) 100 provided in a train such that it can communicate therewith. The train control and management system 100 is a device which manages the entire train. Data on monitoring and control of various devices mounted on cars of the train, such as motors and brakes, is managed at a motorman's seat in a centralized management manner. The control by the controller 6 will be described later in detail.

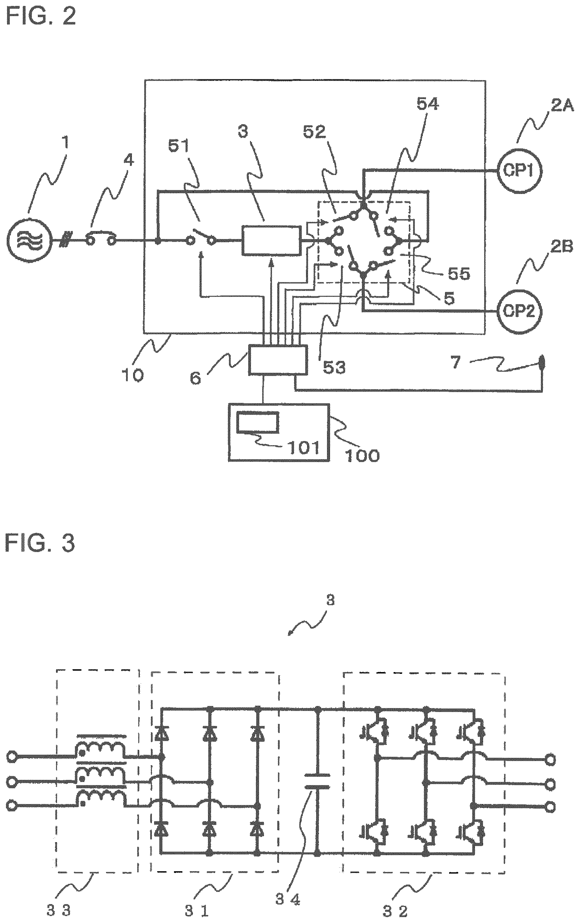

FIG. 2 is a diagram illustrating another example of the configuration of a power supply unit in the system in which the air-conditioning apparatus according to embodiment 1 of the present invention is provided as a main element. In the example as illustrated in FIG. 2, the molded case circuit breaker 4 is located outside the power supply unit 10. The opening and closing control of the molded case circuit breaker 4 may be performed by the management control device 101 or may be performed as manual control, not by the controller 6.

FIG. 3 is a diagram illustrating an example of the circuit configuration of the power converter 3 according to embodiment 1 of the present invention. The power converter 3 converts an electric power supplied from the railroad-vehicle auxiliary power supply unit 1 into an electric power having an arbitrary frequency, and then supplies this electric power to the compressor 2. The power converter 3 of embodiment 1 includes a rectifier circuit 31, an inverter circuit 32, an electric reactor 33 and a capacitor 34. It should be noted that with respect to the power converter 3, elements thereof are selected to form a circuit such that the power capacity of the power converter 3 will be 50% of rated power required to achieve the maximum air-conditioning capacity.

The rectifier circuit 31 rectifies a three-phase AC voltage which is applied to the railroad-vehicle auxiliary power supply unit 1, and thereby converts the voltage into a DC voltage. In the power converter 3 of embodiment 1, the rectifier circuit 31 is made up of diodes as illustrated in FIG. 1. It should be noted that the elements of the rectifier circuit 31 are not limited to the diodes, and the rectifier circuit 31 may be made up of a pulse width modulation (PWM) converter including semiconductor switching elements such as insulated gate bipolar transistors (IGBTs).

The inverter circuit 32 converts a DC voltage into a three-phase AC voltage with an arbitrary frequency, and supplies power related to this conversion to the compressor 2. The inverter circuit 32 according to embodiment 1 includes arms in each of which a switching element and a diode are connected in parallel as illustrated in FIG. 3. The arms are paired, and the inverter circuit 32 is made up of three pairs of arms which are associated with three phases. For example, each of these elements may be formed of a power semiconductor made of, for example, silicon, silicon carbide or gallium nitride.

An electric reactor 33 is provided for the purpose of improving a power factor, reducing harmonics, etc. The electric reactor 33 of embodiment 1 is a three-phase AC reactor which is provided to accord with three phases of the railroad-vehicle auxiliary power supply unit 1. The electric reactor 33 is not limited to the three-phase electric reactor. For example, a DC reactor may be provided between the rectifier circuit 31 and the capacitor 34 in accordance with specifications of a power supply. In some cases, no electric reactor may be provided. The capacitor 34 is provided for power compensation between two converters, which are the rectifier circuit 31 and inverter circuit 32. The capacitor 34 smoothes the DC voltage obtained by the conversion by the rectifier circuit 31.

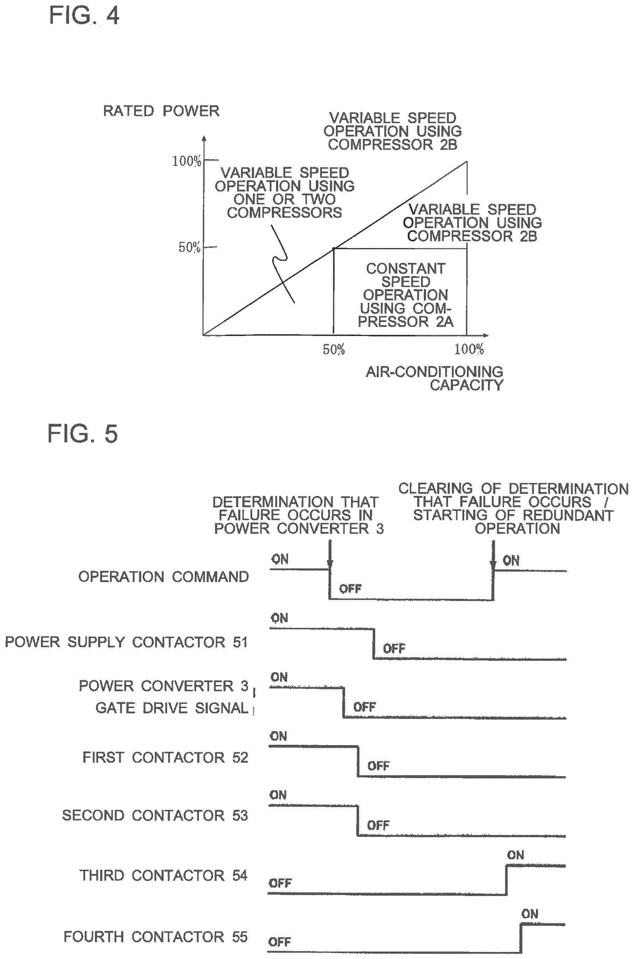

FIG. 4 is a view for explaining distribution of electric power which is supplied to the compressor 2 in relation to the air-conditioning capacity of the air-conditioning apparatus according to embodiment 1 of the present invention. Next, a basic operation control by the controller 6 over supplying of electric power in the power supply unit 10 of embodiment 1 will be described.

For example, based on an air-conditioning capacity found from that temperature of air in target space to be air-conditioned, which is detected by a temperature detection device 7 such as a thermistor, the controller 6 calculates drive rotation speeds at which the compressors 2A and 2B are to be operated. Then, the controller 6 sends control signals to the molded case circuit breaker 4, the power converter 3 and the switching device 5 to drive the compressors 2A and 2B at the calculated drive rotation speeds. At this time, by varying the drive rotation speeds of the compressors 2A and 2B in accordance with the air-conditioning capacity, it is possible to achieve a fine air-conditioning control.

For example, in the case of driving both compressors 2A and 2B with electric power supplied via the power converter 3, the controller 6 closes the molded case circuit breaker 4, the power supply contactor 51, the first contactor 52 and the second contactor 53, and opens the third contactor 54 and the fourth contactor 55. Thereby, a three-phase AC voltage with a power-supply frequency is applied to the power converter 3 from the railroad-vehicle auxiliary power supply unit 1. As described above, the power capacity of the power converter 3 is 50% of the rated power. Thus, until the sum of electric power supplied to the compressors 2A and 2B reaches 50% of the rated power, the compressors 2A and 2B are driven with the electric power supplied via the power converter 3.

Next, in the case where the sum of electric power supplied to the compressors 2A and 2B becomes larger than or equal to 50% of the rated power, and exceeds the power capacity of the power converter 3, electric power supplied via the power converter 3 is not sufficient. Therefore, one of the compressors 2 is supplied with power directly from the railroad-vehicle auxiliary power supply unit 1. The other compressor 2 is supplied with electric power via the power converter 3.

The following description is made by referring to by way of example the case where the compressor 2A is driven by electric power supplied directly from the railroad-vehicle auxiliary power supply unit 1, and the compressor 2B is driven by electric power supplied via the power converter 3. The contactors of the switching device 5 are switched to cause electric power to be supplied directly from the railroad-vehicle auxiliary power supply unit 1 to the compressor 2A.

First, the controller 6 opens the first contactor 52 to stop supplying of electric power from the power converter 3 to the compressor 2A. Then, the third contactor 54 is closed. As the third contactor 54 is closed, electric power is supplied to the compressor 2A directly from the railroad-vehicle auxiliary power supply unit 1. To continue supplying of electric power to the compressor 2B from the power converter 3, the controller 6 keeps the second contactor 53 closed.

As described above, the load output of each of the compressors 2A and 2B reaches the maximum, with the power-supply frequency of the railroad-vehicle auxiliary power supply unit 1. Therefore, with electric power supplied from the railroad-vehicle auxiliary power supply unit 1, the output of the compressor 2A is fixed at 50% of the maximum air-conditioning capacity. Then, with electric power supplied via the power converter 3, the compressor 2B achieves an output at air-conditioning capacity corresponding to a drive rotation speed which is achieved with the electric power supplied via the power converter 3. Since a varied air-conditioning capacity achieved by the compressor 2B compensates for an insufficient air-conditioning capacity achieved by driving the compressor 2A only, a minute air-conditioning control can be maintained even under an operating condition with an air-conditioning capacity larger than or equal to 50% the air-conditioning capacity.

Although in the above configuration, the power capacity of the power converter 3 is set equal to 50% of the rated power, it may be set, for example, larger than or equal to 50% of the rated power. For example, suppose an air-conditioning capacity frequently applied to the operation of the air-conditioning apparatus is around 50% of the rated power. In this case, in the case where the power capacity of the power converter 3 is set to 50% of the rated power, each time the air-conditioning capacity raises above or falls below the threshold of 50% of the rated power, the contactors of the switching device 5 must be switched. If the contactors are frequently switched, their lives will be shortened. Therefore, the power capacity of the power converter 3 is set larger than or equal to the frequently applied air-conditioning capacity to increase a zone in FIG. 4, in which two compressors 2 are driven with the electric power supplied via the power converter 3. It is therefore possible to reduce the frequency of switching of the contactors.

In addition, since the circuit is provided with the above connection, it is advantageous in increasing of the redundancy of the railroad-car air-conditioning apparatus. An example of a power supplying operation which is performed to accord with a failed portion of the railroad-car air-conditioning apparatus will be described.

FIG. 5 is a timing chart of operations from an operation to make the determination that a failure occurs in the power converter 3 according to embodiment 1 of the present invention to an operation to start a redundant operation. First, it will be described what operations are performed in the case where a failure occurs in the power converter 3.

For example, the controller 6 detects abnormality in the power converter 3 which is in operation. As such abnormality, for example, supplying of overcurrent to the power converter 3, application of an overvoltage to the power converter 3 and temperature abnormality of switching elements of the inverter circuit 32 are present. It should be noted that in the case where abnormality is detected only once, this detection may be erroneous detection. In view of this point, in the case where abnormality of the power converter 3 is continuously detected even if output power is reduced and restored to required power, and re-starting of the air-conditioning apparatus is repeated, the controller 6 determines that a failure occurs in the power converter 3.

In the case where the controller 6 determines that a failure occurs in the power converter 3, it sets the state of an operation command to the off state, to thereby stop the operation of the refrigerant circuit in the air-conditioning apparatus. Then, the controller 6 sets the states of gate drive signals for the switching elements of the inverter circuit 32 to the off state, to thereby stop the operation of the power converter 3. Next, in order to electrically disconnect the failed power converter 3 from the railroad-car auxiliary power source unit 1 and the compressors 2, the controller 6 opens the first contactor 52 and the second contactor 53. Subsequently, the power supply contactor 51 is opened.

When electric power is supplied to the compressors 2 directly from the railroad-car auxiliary power source unit 1 immediately after the power supply contactor 51, the first contactor 52 and the second contactor 53 are opened, residual induced voltages applied to the compressors 2 and a phase of the voltage will interfere with an AC voltage of the railroad-car auxiliary power source unit 1, as a result of which a failure may occur in the compressors 2. Thus, after opening the power supply contactor 51, the first contactor 52, and the second contactor 53, when the controller 6 determines that the residual induced voltages of the compressors 2 are sufficiently reduced, it sends a command signal to start the redundant operation. At this time, the controller 6 sends the signal to close the third contactor 54 and the fourth contactor 55 in this order. When the third contactor 54 and the fourth contactor 55 are closed, electric power is supplied to the compressors 2A and 2B directly from the railroad-car auxiliary power source unit 1. Then, the air-conditioning apparatus can resume a cooling operation.

Since electric power cannot be supplied via the power converter 3, the drive rotation speeds for the compressors 2 cannot be changed, and the compressors 2 thus operate at fixed drive rotation speeds. Therefore, the controller 6 adjusts the air-conditioning capacity by performing the opening and closing control over the third contactor 54 and the fourth contactor 55.

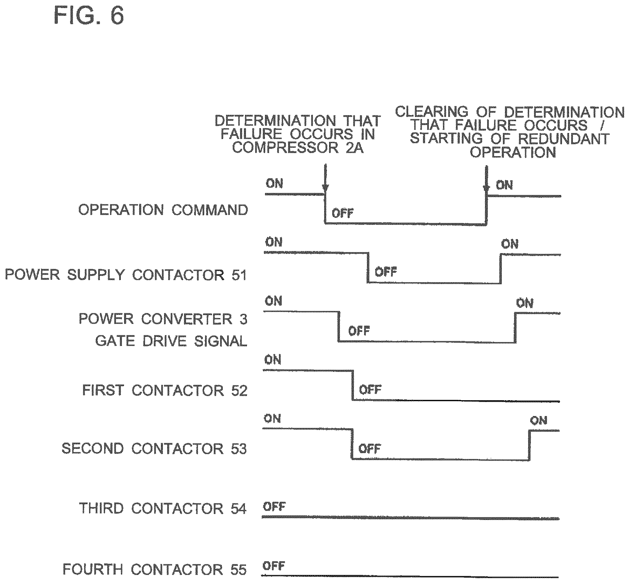

FIG. 6 is a timing chart of operations from an operation to make the determination that a failure occurs in the compressor 2A according to embodiment 1 of the present invention to an operation to start the redundant operation. Next, it will be described what operations are performed in the case where a failure occurs in the compressor 2A. In the following, it is assumed that the compressor 2B, in which no failure occurs, is driven by electric power supplied via the power converter 3. However, this is not restrictive, and for example, the compressor 2B may be driven by electric power supplied directly from the railroad-car auxiliary power source unit 1.

For example, the controller 6 detects abnormality in the compressor 2A which is in operation. As such abnormality, for example, abnormality of the temperature of the winding of the electric motor, supplying of overcurrent, high-pressure abnormality, and temperature abnormality of a discharge pipe are present. As in the above determination on occurrence of a failure in the power converter 3, when abnormality in the compressor 2A is continuously detected, the controller 6 determines that a failure occurs in the compressor 2A.

In the case where the controller 6 determines that failure occurs in the compressor 2A, the controller 6 sets the state of an operation command to the off state, to thereby stop the operation of the refrigerant circuit in the air-conditioning apparatus. By issuing an operation stop command, first, the controller 6 sets the states of gate drive signals for the switching elements of the inverter circuit 32 to the off state, to thereby stop the operation of the power converter 3. Next, in order to electrically disconnect the power converter 3 from the railroad-car auxiliary power source unit 1 and the compressors 2, the controller 6 opens the first contactor 52 and the second contactor 53. Subsequently, the power supply contactor 51 is opened.

After opening the power supply contactor 51, the first contactor 52 and the second contactor 53, when the controller 6 determines the residual induced voltage of the compressor 2B is sufficiently reduced, it sends a command signal to start the redundant operation. In this case, first, the power supply contactor 51 is closed to cause the railroad-car auxiliary power source unit 1 and the power converter 3 to be electrically connected to each other. Then, after an input voltage to the power converter 3 reaches a start-up level, the controller 6 sends a control signal to the power converter 3 to cause the power converter 3 to start to operate. Then, the controller 6 closes the second contactor 53. Electric power is supplied to the compressor 2B via the power converter 3 to cause the compressor 2B to be re-driven. Although with the compressor 2B alone, the air-conditioning capacity can be displayed only up to 50% of the rated power, the operation of the air-conditioning apparatus can be continued. Although the above description is made by referring to the case where a failure occurs in the compressor 2A, the basic operation to be performed in the case where a failure occurs in the compressor 2B is the same as that in the case where a failure occurs in the compressor 2A. In the case where a failure occurs in the compressor 2B, the first contactor 52 is closed to drive the compressor 2A, instead of closing the second contactor 53.

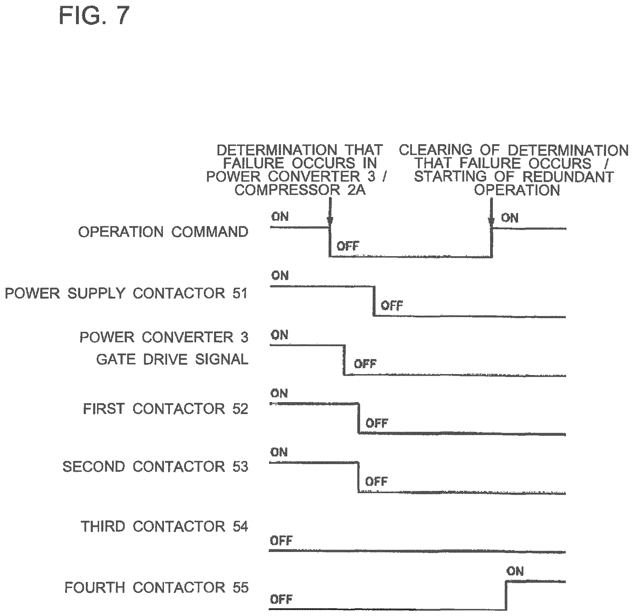

FIG. 7 is a timing chart of operations from an operation to make the determination that a failure occurs in the power converter 3 and the compressor 2A according to embodiment 1 of the present invention to an operation to start the redundant operation. Furthermore, it will be described what operations are performed in the case where failure occurs in the power converter 3 and the compressor 2A. For example, the controller 6 detects abnormality in the power converter 3 and the compressor 2A which are in operation, and determines whether a failure occurs in them. The detection of abnormality and determination of whether a failure occurs are carried out in the same procedures as described above.

In the case where the controller 6 determines that a failure occurs in the power converter 3 and the compressor 2A, it sets the state of an operation command to the off state to thereby stop the operation of the refrigerant circuit in the air-conditioning apparatus. By issuing an operation stop command, first, the controller 6 sets the states of gate drive signals for the switching elements of the inverter circuit 32 to the off state to thereby stop the operation of the power converter 3. Next, in order to electrically disconnect the power converter 3 from the railroad-car auxiliary power source unit 1 and the compressors 2, the controller 6 opens the first contactor 52 and the second contactor 53. Subsequently, the power supply contactor 51 is opened.

After opening the power supply contactor 51, first contactor 52 and the second contactor 53, when the controller 6 determines that the residual induced voltage of the compressor 2B is sufficiently reduced, it sends a command signal to start the redundant operation. In this case, the fourth contactor 55 is closed. Electric power is supplied to the compressor 2B directly from the railroad-car auxiliary power source unit 1, thereby causing the compressor 2B to resume its operation. The controller 6 adjusts the air-conditioning capacity by performing the opening and closing control over the fourth contactor 55.

As described above, in the circuit configuration of the air-conditioning apparatus of embodiment 1, when the air-conditioning apparatus is operated with the rated power with which the air-conditioning capacity is maximized, the controller 6 controls switching of the switching device 5 such that one of the compressors 2 is supplied with electric power from the power converter 3 and the other is supplied with electric power directly from the railroad-car auxiliary power source unit 1. Therefore, the power converter 3 can be configured to have a power capacity corresponding to 50% of the rated power, and supply electric power to only one of the compressors 2. Accordingly, the power converter 3 can be made smaller, and the air-conditioning apparatus can thus be also made smaller. Further, even if a failure occurs in the power converter 3 and one of the compressors 2, the controller 6 can switch the switching device 5 to supply electric power to the other compressor 2 only, in which a failure does not occur, without supplying electric power to the above compressor 2 in which the failure occurs. The air-conditioning apparatus thus ensures more redundancy.

### Embodiment 2

In the air-conditioning apparatus of embodiment 1, as indicated in FIG. 4, in the case where the sum of electric power supplied to the compressors 2A and 2B is larger than or equal to 50% of the rated power, one of the compressors 2 is supplied with electric power via the power converter 3 and the other is supplied with electric power directly from the railroad-car auxiliary power source unit 1. Since one of the compressors 2 is driven with electric power supplied via the power converter 3, air-conditioning in the neighborhood of the maximum air-conditioning capacity can be finely controlled.

On the other hand, for example, at the start of train service, because a temperature difference between an air-conditioning temperature command value, which is a target temperature, and a passenger compartment temperature, which is a real temperature, is great, the operation of the air-conditioning apparatus is continued for a long time with the maximum air-conditioning capacity. At this time, since the operation is continued at the maximum air-conditioning capacity with the power supplied via the power converter 3, the power consumption is increased by an amount corresponding to a loss caused at the power converter 3, as compared with the case where electric power is supplied directly from the railroad-car auxiliary power source unit 1.

In view of the above, in an air-conditioning apparatus according to embodiment 2, for example, in the case where an operation in which the air-conditioning capacity is the maximum is continued for a long time, the compressors 2A and 2B are both supplied with electric power directly from the railroad-car auxiliary power source unit 1.

Therefore, the controller 6 calculates the difference between the air-conditioning temperature command value and the passenger compartment temperature. Then, when determining that the difference is greater than or equal to a predetermined threshold, the controller 6 opens the first contactor 52 and the second contactor 53, and closes the third contactor 54 and the fourth contactor 55. When the third contactor 54 and the fourth contactor 55 are closed, electric power is supplied to the compressors 2A and 2B directly from the railroad-car auxiliary power source unit 1.

By performing the above control, the operation can be performed with the rated power without electric power supplied via the power converter 3. It is therefore possible to reduce the power consumption of the air-conditioning apparatus which is operated with the maximum air-conditioning capacity.

It should be noted that in the case where the compressors 2A and 2B are both connected to the railroad-car auxiliary power source unit 1, and are driven, they are rotated at a high drive rotation speed immediately after they are started. Consequently, instantaneous large current generates, and an electrical stress acts on the railroad-car auxiliary power source unit 1. Furthermore, when the two compressors 2 are started simultaneously, instantaneous large current is superimposed, thus increasing the electrical stress, as a result of which a failure may occur in the railroad-car auxiliary power source unit 1. Thus, the timing of closing the third contactor 54 and that of closing the fourth contactor 55 are staggered, thus staggering start-up timings of the compressors 2 and staggering the times at which large current generates. It is therefore possible to reduce the electrical stress on the railroad-car auxiliary power source unit 1.

### Embodiment 3

In an air-conditioning apparatus according to embodiment 3, the compressor 2 to be connected to the railroad-car auxiliary power source unit 1 is switched between the two compressors 2 at an arbitrary timing. It is assumed that the configuration of the apparatus is the same as the configuration of embodiment 1 as described with reference to FIG. 1.

In the case where the compressors 2 are started with electric power supplied via the power converter 3, the drive rotation speeds of the compressors 2 can be gradually increased. By contrast, in the case where the compressors 2 are started with electric power directly supplied from the railroad-car auxiliary power source unit 1, the compressors 2 are subject to a mechanical stress, since driving of the compressors 2 is started from driving at high drive rotation speeds immediately after the start of supplying of the power. When the mechanical stress accumulates, the lives of the compressors 2 may be shortened. Therefore, when the operation is performed using both the compressors 2, if the compressors 2, which are supplied with electric power directly from the railroad-car auxiliary power source unit 1, are used in an unbalanced manner, the mechanical stresses also acting on the compressors 2 also accumulate in an unbalanced manner, as a result of which not only the lives of the compressors 2, but the live of the entire air-conditioning apparatus will be shortened

Thus, in the air-conditioning apparatus according to embodiment 3, the mechanical stress acting on the compressors 2 is leveled out. The air-conditioning apparatus according to embodiment 3 includes a compressor 2A and a compressor 2B. Therefore, the compressors 2A and 2B are alternately supplied with electric power directly from the railroad-car auxiliary power source unit 1. In the case where the compressor 2A is supplied with electric power directly from the railroad-car auxiliary power source unit 1, the controller 6 closes the third contactor 54 and opens the fourth contactor 55. On the other hand, in the case where the compressor 2B is supplied with electric power directly from the railroad-car auxiliary power source unit 1, the controller 6 closes the fourth contactor 55 and opens the third contactor 54.

Next, it will be described how the mechanical stress on the compressors 2 is leveled out when the air-conditioning capacity varies. To begin with, it is assumed that in order that the air-conditioning capacity reach 50% of the maximum air-conditioning capacity, the compressor 2A is supplied with electric power via the power converter 3, while the compressor 2B is supplied with electric power directly from the railroad-car auxiliary power source unit 1. Next, when the air-conditioning capacity falls below 50% of the maximum air-conditioning capacity, the switching device 5 is switched to cause both the compressors 2A and 2B to be supplied with electric power via the power converter 3. Then, when the air-conditioning capacity raises to re-reach 50% of the maximum air-conditioning capacity or more, the compressor 2A is supplied with electric power directly from the railroad-car auxiliary power source unit 1, and the compressor 2B is supplied with electric power via the power converter 3.

In the above series of operations, each of the compressors 2A and 2B is supplied with electric power directly from the railroad-car auxiliary power source unit 1 once. When this series of operations is repeated, the compressors 2 can be operated without causing a greater mechanical stress to act on only one of the compressors 2. It is therefore possible to prevent the life of the air-conditioning apparatus from being shortened.

Although in the above example, the compressors 2 are alternately supplied with electric power directly from the railroad-car auxiliary power source unit 1, this is not restrictive. For example, the compressor 2 to be supplied with electric power directly from the railroad-car auxiliary power source unit 1 may be switched between the two compressors 2 every predetermined day or days or every predetermined hour or hours or each time the distance by which the train run reaches a predetermined distance.

The controller 6 may count the number of times the third contactor 54 is closed and the number of times the fourth contactor 55 is closed, and perform switching control such that the difference between the numbers does not exceed a predetermined number or more.

### Embodiment 4

As described above, for example, a train includes a train control and management system 100 as illustrated in FIG. 1. In an air-conditioning apparatus according to embodiment 4, for example, when it is determined that a failure occurs in the apparatus, the controller 6 transmits a failure detection signal to the train control and management system 100. It should be noted that the controller 6 of each of the cars of the train may transmit not only a signal indicating air-conditioning settings or occurrence of a failure, but a signal including data which indicates in detail part of the air-conditioning apparatus in which a failure occurs, and also indicates that the operation to be performed is changed to the redundant operation.

Thereby, for example, a conductor and a driver in the train cabin can manage detailed operating conditions of the air-conditioning apparatus. Then, in the case where reduction of the air-conditioning capacity can be confirmed upon changing to the redundant operation, it is possible to guide passengers to a car in which an air-conditioning apparatus is operating normally.

Further, in addition to transmission of a signal to the train control and management system 100, for example, a failure detection signal may be wirelessly transmitted to a maintenance company. For example, while the cars are in the stopped state, the maintenance company checks in advance where a failure occurs, and can immediately make repairs and inspection.

### Embodiment 5

In embodiment 4, the controller 6 and the train control and management system 100 are separate from each other. In embodiment 5, a management control device 101 included in the train control and management system 100 may incorporate a controller 6, and may perform processing regarding the control to be performed by the controller 6 according to each of the above embodiments. In such a manner, since the management control device 101 of the train control and management system 100 performs the processing to be performed by the controller 6, it is not necessary to provide a controller 6 in the air-conditioning apparatus. As a result, the air-conditioning apparatus can be simplified. This is more advantageous for the entire train, because the train is provided with a plurality of air-conditioning apparatuses.

Although in embodiments 1 to 4, the compressors 2 are configured to achieve the maximum load output with the power source frequency of the railroad-car auxiliary power source unit 1, this is not restrictive. It may be set that the compressors 2 can be driven with a frequency higher than the power source frequency of the railroad-car auxiliary power source unit 1. In this case, since the compressors 2 can be rotated at a high drive rotation speed with electric power supplied via the power converter 3, the compressor 2 can achieve a large air-conditioning capacity. However, when the power converter 3 fails, and the railroad-car auxiliary power source unit 1 performs the redundant operation, the compressors cannot be driven at maximum drive rotation speeds, as a result of which the air-conditioning capacity is reduced.

With respect to embodiments 1 to 4, it is explained above that the power supply unit 10 drives two compressors 2. This, however, is not particularly restrictive. For example, even in the case where the present invention is applied to a fan drive circuit which includes an indoor fan and an outdoor fan in place of the two compressors 2, it is possible to obtain the same advantages as or similar advantages to those of the embodiments.

### Reference Signs List

- 1: railroad-car auxiliary power source unit
- 2, 2A, 2B: compressor
- 3: power converter
- 4: circuit breaker
- 5: switching device
- 6: controller
- 7: temperature detection device
- 10: power supply unit
- 31: rectifier circuit
- 32: inverter circuit
- 33: electric reactor
- 34: capacitor
- 51: power supply contactor
- 52: first contactor
- 53: second contactor
- 54: third contactor
- 55: fourth contactor
- 100: train control and management system
- 101: management control device

## Claims

1. An air-conditioning apparatus comprising:
- a plurality of compressors included in one or more refrigerant circuits configured to air-condition a target space to be air-conditioned;
- a power converter configured to convert electric power supplied from a power source unit, and supply the compressors with electric power for driving the compressors at an arbitrary drive rotation speed;
- a switching device configured to perform switching between a power supplying operation to cause each of the compressors to be supplied with electric power from the power converter and a power supplying operation to cause each of the compressors to be supplied with electric power directly from the power source unit; and
a controller configured to control the power converter and the switching device.

2. The air-conditioning apparatus of claim 1, wherein:
- the switching device includes a first switch, a second switch, a third switch and a fourth switch;
- the first switch includes contacts one of which is connected to an output of the power converter, and an other of which is connected to an input of at least one of the compressors;
- the second switch includes contacts one of which is connected to an output of the power converter, and an other of which is connected to an input of one of the compressors which is other than the at least one of the compressors;
- the third switch includes contacts one of which is connected to the power source unit, and an other of which is connected to an input of the at least one of the compressors; and
- the fourth switch includes contacts one of which is connected to the power source unit, and an other of which is connected to the input of the one of the compressors which is other than the at least one of the compressors.

3. The air-conditioning apparatus of claim 1 or 2,
wherein when the air-conditioning apparatus is operated with rated power at which an air-conditioning capacity is a maximum, the controller controls switching of the switching device to cause at least one of the compressors to be supplied with electric power directly from the power source unit, and cause an other of the compressors to be supplied with electric power from the power converter.

4. The air-conditioning apparatus of any one of claims 1 to 3,
wherein when the air-conditioning apparatus is operated with electric power less than half the rated power, the controller controls switching of the switching device to cause one of the compressors to be supplied with electric power from the power converter, the one of the compressors being to be driven.

5. The air-conditioning apparatus of any one of claims 1 to 4,
wherein when the air-conditioning apparatus is operated with electric power larger than or equal to half the rated power, but less than the rated power, the controller controls switching of the switching device to cause at least one of the compressors to be supplied with electric power directly from the power source unit, and cause an other of the compressors to be supplied with a deficiency of electric power from the power converter.

6. The air-conditioning apparatus of any one of claims 1 to 5,
wherein when detecting a failed one of the compressors in which a failure occurs, the controller controls switching of the switching device to stop supplying of electric power to the failed compressor and change a compressor to be supplied with electric power from the failed compressor to an other of the compressors or continue supplying of electric power to the other of the compressors.

7. The air-conditioning apparatus of any one of claims 1 to 6,
wherein when detecting that a failure occurs in the power converter, the controller controls switching of the switching device to stop supplying of electric power from the power source unit to the power converter and cause the compressors to be supplied with electric power directly from the power source unit.

8. The air-conditioning apparatus of any one of claims 1 to 7,
wherein when a temperature difference between an actual temperature in a target space to be air-conditioned and a target command temperature is greater than a threshold temperature difference and it is determined that the rated power with which an air-conditioning capacity is maximized is outputted, the controller controls switching of the switching device to cause all the compressors to be supplied with electric power directly from the power source unit.

9. The air-conditioning apparatus of any one of claims 1 to 8,
wherein the controller controls switching of the switching device to stagger start-up timings of the compressors, at which the compressors are supplied with electric power directly from the power source unit.

10. The air-conditioning apparatus of any one of claims 1 to 9,
wherein the air-conditioning apparatus is a railroad-car air-conditioning apparatus mounted on a car of a train.

11. The air-conditioning apparatus of claim 10,
wherein when a failure is detected, a failure detection signal is transmitted to a train control and management system configured to monitor and control devices mounted on the railroad car, in a centralized management manner.

12. The air-conditioning apparatus of claim 10 or 11,
wherein when a failure is detected, a failure detection signal is wirelessly transmitted to a device located outside the train.

13. The air-conditioning apparatus of any one of claims 10 to 12,
wherein the controller is included in a train control and management system configured to monitor and control devices mounted on the car of the train, in a centralized manner.
